# EUROPEAN PATENT APPLICATION

(11) **EP 4 647 734 A1**
(43) Date of publication of application: **12.11.2025**
(21) Application number: 23914814.1
(22) Date of filing: 27.12.2023
(51) Int. Cl.: G01L 5/00, G01L 1/14

(54) **MEASURING DEVICE AND MEASURING SYSTEM**

(30) Priority: 04.01.2023 US 202363478371 P
(71) Applicant: Suntory Holdings Limited, Osaka 530-8203 (JP)
(72) Inventor: YAMAMURA, Junki, Soraku District, Kyoto 6190284 (JP); NAKAMARU, Satoshi, Kawasaki-shi, Kanagawa 216-0003 (JP); TAJIMA, Koutarou, Kawasaki-shi, Kanagawa 216-0003 (JP)
(74) Representative: Vossius & Partner Patentanwälte Rechtsanwälte mbB
(86) International application number: PCT/JP2023/047094
(87) International publication number: WO 2024/147329

(57) **Abstract**

In order to solve the conventional problem that it is sometimes difficult to properly perform required measurement of detection target items of target objects that are uneven or target objects with low stiffness, a measuring apparatus 1 includes a sensor array unit 5 having multiple sensors 51 that are aligned on a placement face and that are each capable of detecting a detection target item of a target object that is positioned so as to oppose the placement face, and a deformable layer 10 that is a flexible layer disposed between the sensor array unit 5 and a target object. The deformable layer 10 has multiple sections that are divided from each other so as to be independently compressible and deformable mainly in a normal direction of the placement face. With the measuring apparatus 1, it is possible to obtain measurement results of a detection target item of a target object such that the influence of the stiffness and the shape of the target object is relatively small.

## Description

### Technical field

The present invention relates to a measuring apparatus and a measuring system that are configured to be capable of contacting a target object and perform measurement of a detection target item of the target object.

### Background Art

Conventionally, pressure sensor arrays and the like have been proposed that are used to measure detection target items such as pressure distribution on target objects such as objects that are in contact with the ground (see Patent Document 1 below, for example).

### Citation List

### Patent Document

Patent Document 1: JP 2018-189513A

### Summary of Invention

### Technical Problem

Incidentally, in the case of measuring detection target items of target objects using planar sensors such as conventional pressure sensor arrays, it is sometimes difficult to properly perform required measurement of detection target items of target objects that are uneven and target objects with low stiffness. For example, there is a problem that in the case of obtaining measurement results of the pressure distribution in a predetermined region where a target object is in contact with the ground, differences in the stiffness and the shape of the target object in the vicinity of the ground surface may affect the measurement results.

The present invention was made in view of such a problem, and it is an object thereof to provide a measuring apparatus and a measuring system that are capable of obtaining measurement results of a detection target item of a target object such that the influence of the stiffness and the shape of the target object is relatively small.

### Solution to Problem

A first aspect of the present invention is directed to a measuring apparatus including: a sensor array unit having multiple sensors that are aligned on a placement face and that are each capable of detecting a detection target item of a target object that is positioned so as to oppose the placement face; and a deformable layer that is a flexible layer disposed so as to be located between the sensor array unit and a target object, wherein the deformable layer has multiple sections that are divided from each other so as to be independently compressible and deformable mainly in a normal direction of the placement face.

With this configuration, it is possible to obtain measurement results of a detection target item of a target object such that the influence of the stiffness and the shape of the target object on the measurement results is relatively small, even when the target object is in contact with the ground surface at a height that varies from section to section due to differences in stiffness and shape of the target object in the vicinity of the ground surface.

Furthermore, a second aspect of the present invention is directed to the measuring apparatus according to the first aspect, wherein the multiple sensors included in the sensor array unit are each a resistance change pressure sensor, a capacitance change pressure sensor, a photo reflector, or a SAW device, and the multiple sensors are each configured to perform detection according to a change in physical properties of the deformable layer.

With this configuration, it is possible to reliably obtain measurement results of a detection target item of a target object such that the influence of the stiffness and the shape of the target object on the measurement results is relatively small.

Furthermore, a third aspect of the present invention is directed to the measuring apparatus according to the first or second aspect, wherein the deformable layer is formed using a material with a Poisson's ratio of less than 0.2, or has the multiple sections formed in a shape or dimensions that do not allow adjacent sections to come into contact with each other in a pressurized state in which a force is applied in a vertical direction to the deformable layer.

With this configuration, the multiple sections of the deformable layer are unlikely to interfere with each other when being compressed, and thus it is possible to obtain measurement results with high resolution in the direction along the placement face.

Furthermore, a fourth aspect of the present invention is directed to the measuring apparatus according to any one of the first to third aspects, wherein the multiple sections are aligned in a direction along the placement face, on a face of the deformable layer that opposes the sensor array unit.

With this configuration, it is possible to obtain measurement results of a detection target item of a target object such that the influence of the stiffness and the shape of the target object on the measurement results is relatively small, and it is also possible to form the contact face with the target object as a flat face.

Furthermore, a fifth aspect of the present invention is directed to the measuring apparatus according to any one of the first to fourth aspects, wherein the multiple sensors are aligned in a horizontal direction, and the deformable layer has a first layer in which the multiple sections are spaced apart from each other and are aligned in a direction along the placement face, and a plate-like second layer that is disposed on at least the top or the bottom of the first layer.

With this configuration, it is possible to form the deformable layer in one piece and easily arrange it on the sensor array unit.

Furthermore, a sixth aspect of the present invention is directed to the measuring apparatus according to the fifth aspect, wherein a ratio of a vertical dimension of the second layer to a vertical dimension of the deformable layer is less than 0.3.

With this configuration, it is possible to obtain measurement results with high resolution in the direction along the placement face.

Furthermore, a seventh aspect of the present invention is directed to the measuring apparatus according to any one of the first to sixth aspects, wherein the multiple sections are spaced apart from each other in a direction along the placement face, a filling material that is different from a constituent material forming the multiple sections is disposed between the multiple sections, and the filling material has a stiffness that is less than or equal to one-half of a stiffness of the constituent material.

With this configuration, it is possible to form the deformable layer in one piece and easily arrange it on the sensor array unit, and it is also possible to form the contact face with the target object as a flat face.

Furthermore, an eighth aspect of the present invention is directed to the measuring apparatus according to any one of the first to seventh aspects, wherein the deformable layer is formed using a material with a ratio of a loss modulus to a storage modulus of less than or equal to one-tenth.

With this configuration, the deformable layer returns to a steady state immediately after each measurement, and thus it is possible to repeat measurements in a short period of time.

Furthermore, a ninth aspect of the present invention is directed to the measuring apparatus according to any one of the first to eighth aspects, wherein the deformable layer is formed using a material in which stress generated in response to strain caused by the outside increases monotonically with a magnitude of the strain.

With this configuration, it is possible to obtain accurate measurement results.

Furthermore, a tenth aspect of the present invention is directed to the measuring apparatus according to any one of the first to ninth aspects, wherein the deformable layer is formed using a foam material with a closed cell structure.

With this configuration, it is possible to form a deformable layer with moderate viscosity.

Furthermore, an eleventh aspect of the present invention is directed to the measuring apparatus according to any one of the first to tenth aspects, wherein the multiple sensors are capable of detecting pressure and each have a rectangular aperture for performing detection, and the deformable layer has a thickness of more than 1 and less than 2.5 relative to a dimension of a short side of the rectangular aperture.

With this configuration, it is possible to prevent buckling or unintended deformation of the multiple sections of the deformable layer when being compressed, and it is also possible to properly obtain measurement results of a target object with various shapes and the like.

Furthermore, a twelfth aspect of the present invention is directed to the measuring apparatus according to any one of the first to eleventh aspects, wherein the deformable layer is formed using EPDM sponge rubber.

With this configuration, it is possible to obtain accurate measurement results of a target object with various shapes and the like.

A thirteenth aspect of the present invention is directed to a measuring system including a measuring apparatus, and a processing unit that acquires a measurement result using a detection result of the measuring apparatus, wherein the measuring apparatus includes: a sensor array unit having multiple sensors that are aligned on a placement face and that are each capable of detecting a detection target item of a target object that is positioned so as to oppose the placement face; and a deformable layer that is a flexible layer disposed so as to be located between the sensor array unit and a target object, the deformable layer has multiple sections that are divided from each other so as to be independently compressible and deformable mainly in a normal direction of the placement face, and the processing unit is configured to acquire a measurement result using a detection result obtained by using some sensors of the multiple sensors as reading targets on each of multiple reading opportunities such that different sensors are reading targets on each reading opportunity.

With this configuration, it is possible to obtain accurate measurement results.

A fourteenth aspect of the present invention is directed to the measuring system according to the thirteenth aspect, wherein the multiple sensors are aligned in at least one predetermined direction, and the processing unit is configured to acquire a measurement result using a detection result obtained by using some sensors of the multiple sensors as reading targets on each of multiple reading opportunities such that two sensors that are adjacent to each other in the predetermined direction are not used together as reading targets on a same reading opportunity.

With this configuration, it is possible to more reliably obtain accurate measurement results.

A fifteenth aspect of the present invention is directed to the measuring system according to the thirteenth or fourteenth aspect, wherein the multiple sensors are aligned in a matrix of N rows and M columns, the processing unit is configured to acquire a measurement result using a detection result obtained by synthesizing a detection result of sensors in a first group that are reading targets on a first reading opportunity and a detection result of sensors in a second group that are reading targets on a second reading opportunity, the sensors in the first group are in even-numbered rows and even-numbered columns of the multiple sensors, and the sensors in the second group are in odd-numbered rows and odd-numbered columns of the multiple sensors.

With this configuration, it is possible to more reliably obtain accurate measurement results.

### Advantageous Effects of Invention

According to the measuring apparatus and the measuring system of the present invention, it is possible to obtain measurement results of a detection target item of a target object such that the influence of the stiffness and the shape of the target object is relatively small.

### Brief Description of Drawings

FIG. 1 is a diagram showing the configuration of a measuring system using a measuring apparatus according to an embodiment.
FIG. 2 is a side view showing the configuration of the measuring apparatus.
FIG. 3 is a diagram illustrating detection regarding a target object using the measuring apparatus.
FIG. 4 is a diagram illustrating detection using the measuring apparatus according to a comparative example.
FIG. 5 is a graph showing an example of the properties of a material of a deformable layer according to this embodiment.
FIG. 6 is a diagram illustrating a deformable layer of a modified example of the measuring apparatus according to this embodiment.
FIG. 7 is a diagram illustrating a deformable layer of another modified example of the measuring apparatus according to this embodiment.
FIG. 8 is a diagram illustrating a deformable layer of another modified example of the measuring apparatus according to this embodiment.
FIG. 9 is a diagram illustrating a deformable layer of another modified example of the measuring apparatus according to this embodiment.
FIG. 10 is a diagram showing an example of sole measurement results in a comparative example.
FIG. 11 is a diagram showing an example of sole measurement results in a first configuration example.
FIG. 12 is a diagram showing an example of sole measurement results in a second configuration example.
FIG. 13 is a diagram showing an example of sole measurement results in a third configuration example.
FIG. 14 is a diagram showing an example of sole measurement results in a fourth configuration example.
FIG. 15 is a diagram showing simulation results regarding sole measurement results according to a fifth configuration example.
FIG. 16 is a diagram showing simulation results regarding sole measurement results according to a sixth configuration example.
FIG. 17 is a diagram showing simulation results regarding sole measurement results according to a seventh configuration example.
FIG. 18 is a block diagram showing an example of a measuring system according to this embodiment.
FIG. 19 is a diagram illustrating a specific example of a sensor reading method of the measuring system.
FIG. 20 is a schematic view of a computer system in the foregoing embodiment.
FIG. 21 is a block diagram of the computer system.

### Description of Embodiment

Hereinafter, an embodiment of a measuring apparatus and the like will be described with reference to the drawings. It should be noted that constituent elements denoted by the same reference numerals in the embodiments are roughly similarly configured, and thus a description thereof may not be repeated.

### Embodiment

In this embodiment, a measuring apparatus is a contact-type measuring device capable of measuring the pressure distribution on a target object when it is in contact with the ground. The measuring apparatus includes a sensor array unit and a divided deformable layer that is connected to the top of the sensor array unit. Hereinafter, a configuration example of such a measuring apparatus will be described.

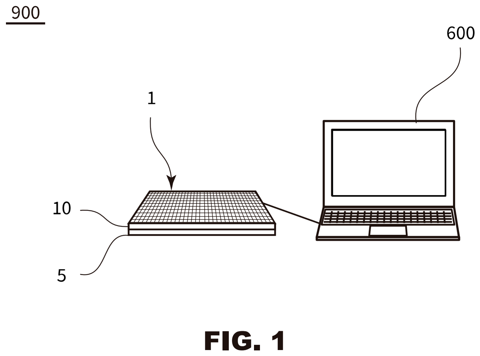

FIG. 1 is a diagram showing the configuration of a measuring system 900 using a measuring apparatus 1 according to this embodiment.

As shown in the figure, the measuring system 900 includes, for example, the measuring apparatus 1 and a terminal apparatus 600.

The measuring apparatus 1 is used to measure a detection target item of a target object. The measuring apparatus 1 is, for example, in the shape of a flat plate that is parallel to the horizontal plane. The measuring apparatus 1 may be in the shape of a flexible sheet as a whole or in the shape of a plate with a certain stiffness. The measuring apparatus 1 may be used, for example, in the state of being connected to the terminal apparatus 600. In this case, the connection may be established through a wired connection or a wireless connection. The measuring apparatus 1 is configured to, for example, output a signal regarding a detection target item to the terminal apparatus 600. The measuring apparatus 1 may be configured to store information and the like acquired regarding a detection target item, in a storage unit such as a built-in memory.

In this embodiment, a detection target item of a target object is, for example, information on the shape of the target object, the stress (pressure) generated when the target object is in contact with the ground, or the like. In the example described below, for example, the target object is a sole of a human body, and the detection target item is information containing the pressure distribution on the sole when it is in contact with the ground. The target object and the detection target item are not limited to these, and can be applied to a variety of applications and detection target items.

The terminal apparatus 600 is, for example, a personal computer (PC) such as a so-called laptop computer. The terminal apparatus 600 is configured to be capable of acquiring measurement results based on a detection target item of the measuring apparatus 1. The measurement results may be, for example, a value regarding a detection target item, an image composed based on a signal regarding a detection target item, or the like. That is to say, the user of the measuring system 900 can use the measuring system 900 by using the terminal apparatus 600. Those that can be used as the terminal apparatus 600 are not limited to personal computers. For example, information processing apparatuses such as so-called smartphones and tablet-type information terminal devices may be used. The functions that are performed by the terminal apparatus 600 may be built into the measuring apparatus 1. The measuring apparatus 1 may include, in addition to the configuration as described below, the configuration of a computer and the like for processing information and the configuration of a display screen and the like for displaying information output by the computer.

In this embodiment, the measuring apparatus 1 has a structure in which known sensors 51 are aligned as described below. It is sufficient that the terminal apparatus 600 can obtain measurement results from these sensors 51 using a known method.

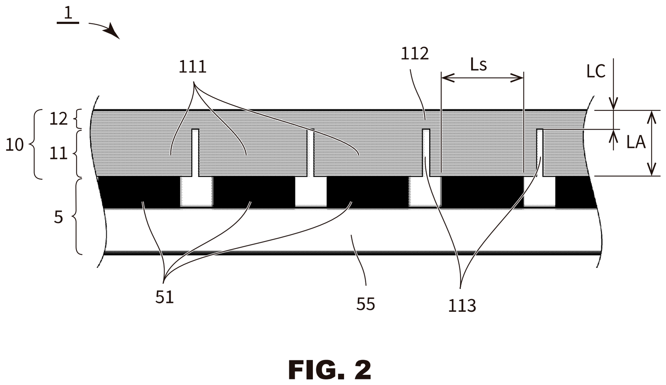

FIG. 2 is a side view showing the configuration of the measuring apparatus 1.

As shown in the figure, in this embodiment, the measuring apparatus 1 includes a sensor array unit 5 and a deformable layer 10.

The sensor array unit 5 has multiple sensors 51. In this embodiment, the sensor array unit 5 has a substrate 55 that is parallel to the horizontal plane. The substrate 55 is equipped with a circuit or the like for acquiring detection results from the sensors 51.

The multiple sensors 51 are aligned on a placement face that is constituted by the upper face of the substrate 55. That is to say, the multiple sensors 51 are aligned in the horizontal plane. The multiple sensors 51 are, for example, aligned in two dimensions respectively extending in a first direction that is along with the placement face and in a second direction that is along the placement face and is different from the first direction. The multiple sensors 51 are aligned in a matrix.

The arrangement of the multiple sensors 51 is not limited to this. For example, the multiple sensors 51 may be aligned in one dimension, or the multiple sensors 51 may be aligned in a circular or concentric annular pattern. The multiple sensors 51 may be aligned in two dimensions or one dimension in a regular manner or in an irregular pattern. The state of being aligned in a regular pattern refers to, for example, a state of being aligned at predetermined intervals, but there is no limitation to this. The multiple sensors 51 may be identical in size and properties, but may differ from one another.

Furthermore, the placement face on which the multiple sensors 51 are aligned does not have to be flat. The sensor array unit 5 does not have to be in the shape of a sheet, and may have a curved, circular, or cylindrical placement face.

Each of the multiple sensors 51 is disposed so as to be capable of performing detection regarding a detection target item of a target object that is positioned so as to oppose the placement face. That is to say, each of the multiple sensors 51 is configured to be capable of performing detection regarding a target object that is positioned above the substrate 55. In this embodiment, each of the multiple sensors 51 is a pressure sensor, and is disposed such that the top has a portion for performing detection (referred to as an "aperture"). In this embodiment, in particular, the aperture of each of the sensors 51 is in a rectangular shape when viewed from above, but there is no limitation to this.

Each of the sensors 51 is, for example, a resistance change pressure sensor, which is a known sensor. However, there is no limitation to this, and each of the sensors 51 may be a capacitance change pressure sensor. Since the sensor array unit 5 is constituted by such sensors, it can detect the pressure distribution on a target object.

Each of the sensors 51 may be, for example, a photo reflector. That is to say, the sensors 51 perform contact measurement, but there is no limitation to this, and they may perform non-contact measurement. The sensors 51 may be surface acoustic wave (SAW) devices.

The deformable layer 10 is disposed on the top of the sensor array unit 5. That is to say, the deformable layer 10 is disposed so as to be located between the sensor array unit 5 and a target object targeted for the detection. The deformable layer 10 may also be said to be disposed so as to oppose the placement face.

The deformable layer 10 is a flexible layer. The deformable layer 10 is configured to deform with ease when a target object approaches the sensor array unit 5 and comes into contact with the deformable layer 10. Examples of a constituent material forming the deformable layer 10 will be described later.

In this embodiment, the deformable layer 10 has multiple sections that are divided from each other. These sections are hereinafter referred to as divided sections 111. The multiple divided sections 111 are aligned in the direction along the placement face, that is, in the horizontal direction.

In this embodiment, the gap between adjacent divided sections 111 is, for example, a void. Hereinafter, such voids between the divided sections 111 may be referred to as spacer portions 113. The divided sections 111 are at a distance from each other with the spacer portions 113 interposed therebetween, and are independently compressible and deformable mainly in the vertical direction, that is, in the normal direction of the placement face. The state of being independently compressible and deformable refers to a state in which when a divided section is compressed, it hardly comes into contact with another divided section 111, or it hardly affects the deformation of another divided section 111 even if it comes into contact with that divided section 111. In this embodiment, each of the divided sections 111 is formed using a single flexible material. The divided sections 111 are formed using a material with a Poisson's ratio as described later, and are at a distance from other divided sections 111 with the spacer portions 113 interposed therebetween, and thus they are independently compressible and deformable.

Furthermore, the deformable layer 10 in this embodiment has a continuous section 112 that is disposed so as to connect the divided sections 111. The continuous section 112 is formed using the same material as the divided sections 111. That is to say, in this embodiment, the deformable layer 10 is a layered portion having the continuous section 112 and the divided sections 111, which are formed using a single material.

The continuous section 112 is configured to, for example, extend in the direction that is parallel to the horizontal plane. That is to say, each of the divided sections 111 may also be said to be a portion projecting in the vertical direction from the continuous section 112.

In this embodiment, the continuous section 112 is disposed on the tops of the divided sections 111. That is to say, the continuous section 112 constitutes the upper face of the measuring apparatus 1. In other words, the divided sections 111 are aligned in a direction so as to oppose the placement face, on the face of the deformable layer 10 that opposes the sensor array unit 5. Since the continuous section 112 is configured to constitute the upper face of the measuring apparatus 1 in this manner, it is possible to form the contact face with the target object as a flat face.

Such a configuration of the deformable layer 10 may be expressed as follows. That is to say, in the deformable layer 10, the multiple divided sections 111 are aligned in the horizontal direction and are in the form of a layer as a whole. Such a layer in which the multiple divided sections 111 are spaced apart from each other by the spacer portions 113 and are aligned in the direction along the placement face can be said to be a first layer 11. In this embodiment, the continuous section 112 is provided, and the continuous section 112 is in the form of a layer. Such a continuous section 112 can be said to be a second layer 12. That is to say, in this embodiment, the deformable layer 10 has the first layer 11 and the second layer 12, and the second layer 12 is located on the top of the first layer 11. The second layer 12 may be located on the bottom of the first layer 11. That is to say, the second layer 12 may also be said to be a plate-like layer that is disposed on at least the top or the bottom of the first layer 11. The second layer 12 may be located in the middle of the first layer 11, and in this case, it may be said that the first layer 11 is provided on both the top and the bottom of the second layer 12.

Since the deformable layer 10 is constituted by the first layer 11 and the plate-like second layer 12 in this manner, it is possible to form the deformable layer 10 in one piece and easily arrange it on the sensor array unit 5.

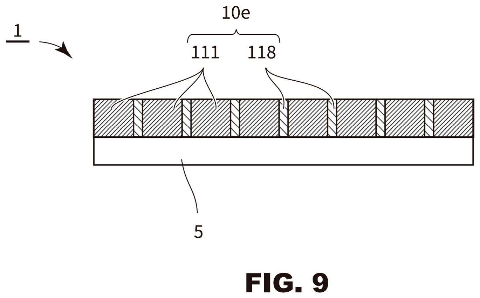

The first layer 11 may include filler portions 118 (shown in FIG. 9) instead of the spacer portions 113. The filler portions 118 are portions that are formed using a material different from that of the divided sections 111 and that are filled between adjacent divided sections 111. In other words, in the first layer 11, a filling material that is different from a constituent material forming the divided sections 111 may be disposed between the divided sections 111. The second layer 12 may not be provided in the deformable layer 10 in the structure using the filler portions 118 in this manner, and in this case as well, it is possible to form the deformable layer 10 in one piece and easily arrange it on the sensor array unit 5. A configuration example of the filler portions 118 made of such a filling material will be described later.

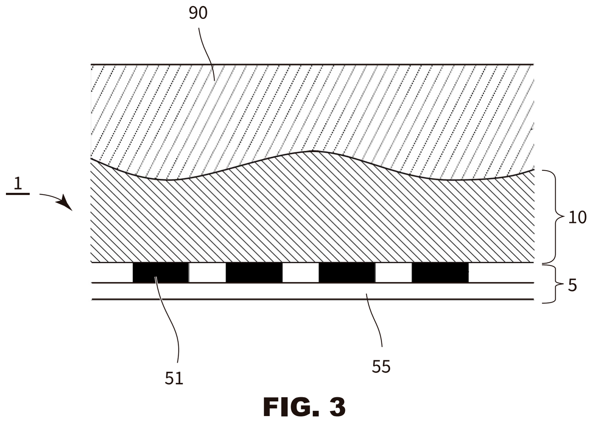

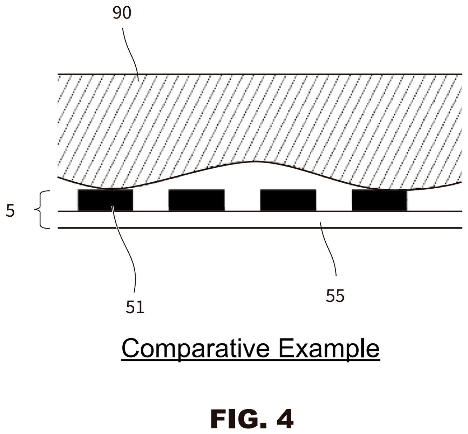

FIG. 3 is a diagram illustrating detection regarding a target object 90 using the measuring apparatus 1. FIG. 4 is a diagram illustrating detection using the measuring apparatus according to a comparative example.

In FIG. 3, the deformable layer 10 of the measuring apparatus 1 is shown as a simplified plate-like layer. FIGS. 3 and 4 show the target object 90 whose face that opposes the measuring apparatus 1 and the like (referred to as a "bottom face") is uneven. Hereinafter, the case of measuring the pressure distribution on the target object 90 when it is in contact with the ground will be described.

In the comparative example, a case is shown in which the deformable layer 10 is not provided and the measurement is performed with the sensor array unit 5 alone. In this case, the bottom face of the target object 90 is in direct contact with the upper face of the sensor array unit 5, and the pressure of the portion is detected by each of the sensors 51. Since the bottom face of the target object 90 is uneven, the bottom face of the target object 90 is in partial contact with the sensor array unit 5, and the pressure change is not detected by the sensors 51 in the portions in which the target object 90 is not in contact with the sensor array unit 5.

On the other hand, in this embodiment, the measuring apparatus 1 is configured as described above, and thus the bottom face of the target object 90 is in contact with the upper face of the deformable layer 10 that is disposed on the upper face of the sensor array unit 5. Since the deformable layer 10 is flexible, the deformable layer 10 deforms along the bottom face of the target object 90, and the deformable layer 10 becomes strained according to the shape and the pressure distribution on the bottom face of the target object 90. In this state where the deformable layer 10 is compressed and strained in the vertical direction, pressure is transmitted through the deformable layer 10 to each of the sensors 51 disposed thereunder, and the pressure distribution is detected by the sensor array unit 5. Therefore, pressure changes are detected by a large number of sensors 51 over a relatively wider range than in the comparative example. Accordingly, it is possible to obtain measurement results of the pressure distribution on the target object 90 over a wider range such that the influence of the stiffness and the shape of the target object 90 on the measurement results is relatively small, even when the target object 90 is in contact with the ground surface at a height that varies from section to section due to differences in stiffness and shape of the target object 90 in the vicinity of the ground surface. The measuring apparatus 1 is configured to detect changes in physical properties of the flexible deformable layer 10, rather than causing the sensor array unit 5 to directly detect the contact or proximity of the target object 90. The physical properties in this case are simply, but not limited to, properties related to density, modulus of elasticity, and light transmission. If the target object 90 itself is soft, measuring the pressure distribution in the comparative example strictly requires that the softness and other conditions of the target object 90 be all known, making it difficult to perform accurate measurement. In contrast, the measuring apparatus 1 according to this embodiment can acquire measurement results that can be regarded as the pressure distribution reflecting the hardness and the shape of the target object 90, by measuring changes in physical properties of the flexible deformable layer 10. Accordingly, it is relatively easy to properly perform required measurement of a detection target item of a target object 90 that is uneven and a target object 90 with low stiffness.

In this embodiment, the deformable layer 10 can be formed using the following materials.

That is to say, the deformable layer 10 is formed using a material with a Poisson's ratio of less than 0.2. With this configuration, the multiple divided sections 111 of the deformable layer 10 are unlikely to interfere with each other when being compressed, and thus it is possible to obtain measurement results with high resolution in the direction along the placement face.

Furthermore, the deformable layer 10 is formed using a material with a ratio (Tanδ) of a loss modulus to a storage modulus of less than or equal to one-tenth. For example, a foam material with low viscosity such as urethane or silicone can be used. If such a material is used, the deformable layer 10 can return to a steady state (a state in which the transient deformation has subsided) immediately after the measurement. Accordingly, the measurement can be performed quickly and the measurement can be repeated again in a short period of time after the measurement is completed.

The deformable layer 10 is formed using a material in which stress generated in response to strain caused by the outside increases monotonically with the magnitude of the strain. Accordingly, it is possible to obtain accurate measurement results. That is to say, depending on the sponge material, there are cases in which the stress does not necessarily increase linearly in accordance with the increase in the amount of deformation. This phenomenon can occur, for example, because buckling or the like due to structural changes inside the material can cause a plateau region or the like. If a dense material that is not sponge or the like is used, the contact face with the sensor array unit 5 or the contact interface with a target object may become constrained and the stiffness may change locally. It is preferable to use a material in which the stress increases monotonically with the magnitude of the strain, which does not cause such a phenomenon.

In the deformable layer 10, the ratio of a vertical dimension LC in the vertical direction (the normal direction of the placement face) of the second layer 12 to a vertical dimension LA of the deformable layer 10 is preferably less than 0.3. With this configuration, it is possible to obtain measurement results with high resolution in the direction along the placement face.

Furthermore, in the deformable layer 10, a thickness LA of the deformable layer 10 relative to a dimension Ls of a short side of the rectangular aperture of each of the sensors 51 (also referred to as an "aspect ratio" hereinafter) is preferably more than 1 and less than 2.5. Since the aspect ratio is kept relatively small in this manner, the divided sections 111 do not buckle or unintentionally deform when being compressed, and the force generated by compression by the target object is properly transmitted to the sensor array unit 5. On the other hand, the aspect ratio being above a certain level allows the surface of the deformable layer 10 to be in contact in a relatively wide area with a target object with relatively large differences in unevenness on the bottom surface. Accordingly, it is possible to more properly obtain measurement results of a target object with various shapes and the like.

As such a material, for example, it is possible to use materials such as synthetic resin sponge or rubber. For example, a foam material with a closed cell structure can be used for the deformable layer 10. If such a material is used, it is possible to form a deformable layer 10 with moderate viscosity.

In this embodiment, the deformable layer 10 can be formed using EPDM sponge. The EPDM sponge can be, for example, "EPT-03S" manufactured by Wakisangyo Co., Ltd. Such EPDM sponge rubber can be said to have a closed cell structure. The hardness thereof is 8±5.

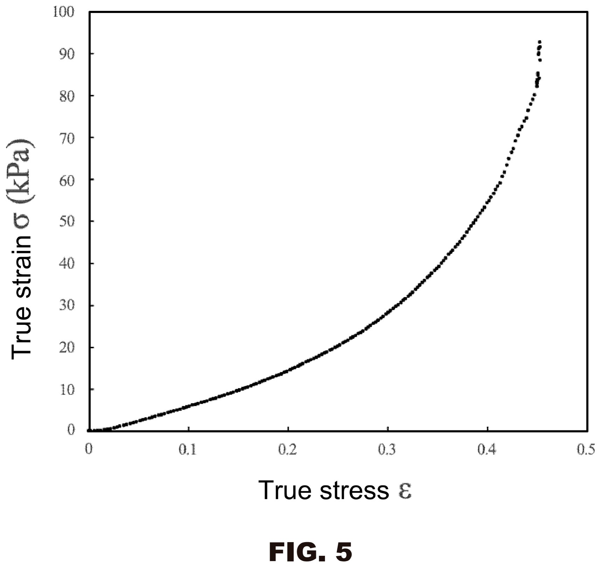

FIG. 5 is a graph showing an example of the properties of the material of the deformable layer 10.

FIG. 5 shows the SS characteristics of "EPT-03S" manufactured by Wakisangyo Co., Ltd. obtained in a uniaxial compression test. The relationship between true strain and true stress is shown when a specimen with a width of 20 mm, a height of 20 mm, and a length of 5 mm is compressed at a rate of 0.5 mm per second.

As shown in the graph, if this EPDM sponge is used, a smooth rise in stress occurs in the region with low strain. Then, as the strain increases, the stress increases monotonically without going through a plateau region. Accordingly, the use of such a material allows for more accurate measurement of the target object.

In this embodiment, the deformable layer for the measuring apparatus 1 may be configured as follows. In each of the following figures, the illustration of the sensor array unit 5 is simplified.

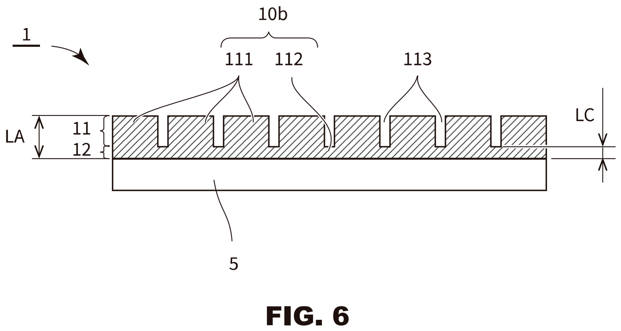

FIG. 6 is a diagram illustrating a deformable layer 10b of a modified example of the measuring apparatus 1 according to this embodiment.

The measuring apparatus 1 shown in FIG. 6 is provided with the deformable layer 10b. In the deformable layer 10b, the first layer 11, that is, the layer in which the divided sections 111 are aligned is disposed on the top of the second layer 12, that is, the continuous section 112. In the deformable layer 10b as well, the ratio of the vertical dimension LC of the second layer 12 to the vertical dimension LA is desirably less than 0.3. With such a structure as well, as described above, it is possible to obtain measurement results of a detection target item of a target object such that the influence of the stiffness and the shape of the target object on the measurement results is relatively small.

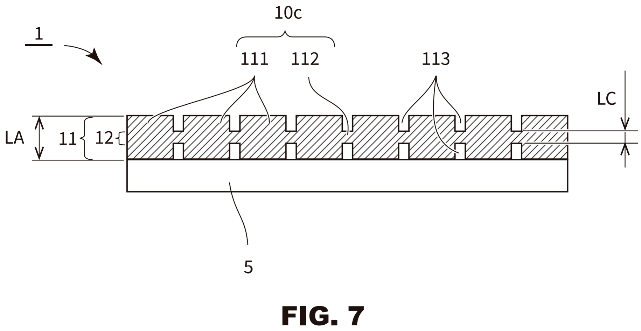

FIG. 7 is a diagram illustrating a deformable layer 10c of another modified example of the measuring apparatus 1 according to this embodiment.

The measuring apparatus 1 shown in FIG. 7 is provided with the deformable layer 10c. In the deformable layer 10c, the second layer 12, that is, the continuous section 112 is located in the middle of the first layer 11, that is, the layer in which the divided sections 111 are aligned. In the deformable layer 10c as well, the ratio of the vertical dimension LC of the second layer 12 to the vertical dimension LA is desirably less than 0.3. With such a structure as well, as described above, it is possible to obtain measurement results of a detection target item of a target object such that the influence of the stiffness and the shape of the target object on the measurement results is relatively small.

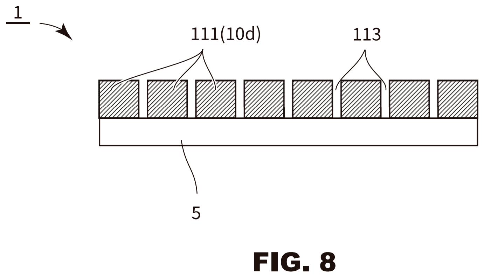

FIG. 8 is a diagram illustrating a deformable layer 10d of another modified example of the measuring apparatus 1 according to this embodiment.

The measuring apparatus 1 shown in FIG. 8 is provided with the deformable layer 10d. The deformable layer 10d is provided with only the layer (the first layer) in which the divided sections 111 are aligned with the spacer portions 113 interposed therebetween, and is not provided with the portion corresponding to the second layer 12 in the foregoing embodiment. With such a structure as well, as described above, it is possible to obtain measurement results of a detection target item of a target object such that the influence of the stiffness and the shape of the target object on the measurement results is relatively small.

FIG. 9 is a diagram illustrating a deformable layer 10e of another modified example of the measuring apparatus 1 according to this embodiment.

The measuring apparatus 1 shown in FIG. 9 is provided with the deformable layer 10e. The deformable layer 10e is not provided with the portion corresponding to the second layer 12 in the foregoing embodiment, and is provided with only the layer in which the divided sections 111 are aligned with the filler portions 118 interposed therebetween. With such a structure as well, as described above, it is possible to obtain measurement results of a detection target item of a target object such that the influence of the stiffness and the shape of the target object on the measurement results is relatively small.

The filling material forming the filler portions 118 has a stiffness that is less than or equal to one-half of the stiffness of the material forming the divided sections 111. More specifically, the synthesis of the filling material is preferably about one-third of the stiffness of the divided sections 111. This prevents the influence of deformation of each divided section 111 from extending to adjacent divided sections 111. Accordingly, it is possible to obtain measurement results with high resolution in the horizontal direction.

As explained above, according to this embodiment, it is possible to obtain measurement results of a detection target item of a target object such that the influence of the stiffness and the shape of the target object on the measurement results is relatively small, even when the target object is in contact with the ground surface at a height that varies from section to section due to differences in stiffness and shape of the target object in the vicinity of the ground surface.

The measuring apparatus 1 according to this embodiment can be suitably used, for example, to measure the pressure distribution on a ground surface when a subject stands or walks with his or her soles on the ground surface (also referred to as "sole measurement results"). That is to say, the shape of a human sole differs from person to person, with different unevenness and hardness of the skin and the like. Some people have arches at high positions (so-called high arch), and some people have so-called floating toes. In such applications, the measuring apparatus 1 can be used to obtain the pressure distribution on the ground surface for each sole having various shapes and characteristics. Accordingly, it is possible to obtain measurement results that can be used for the purpose of making judgments regarding the state of the subject based on measurement results of the pressure distribution on the ground surface.

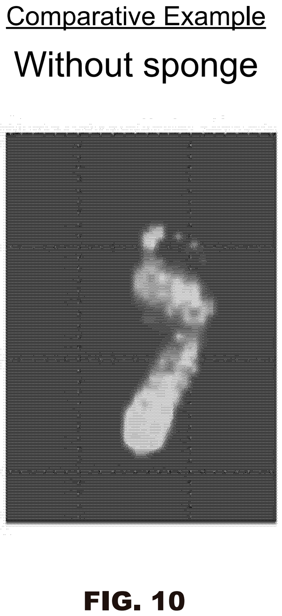

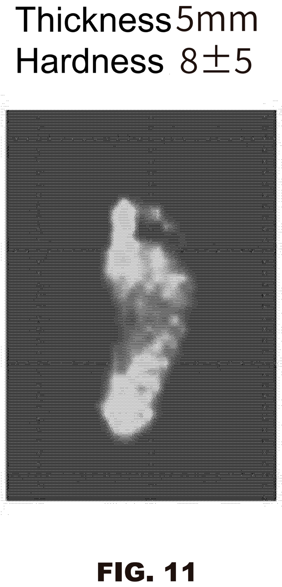

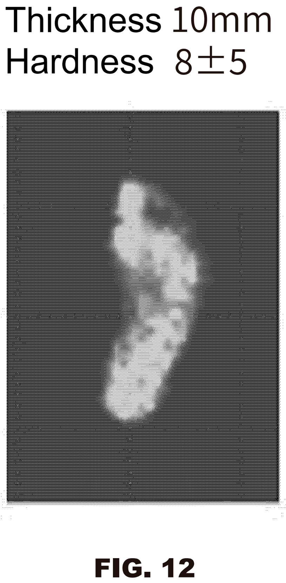

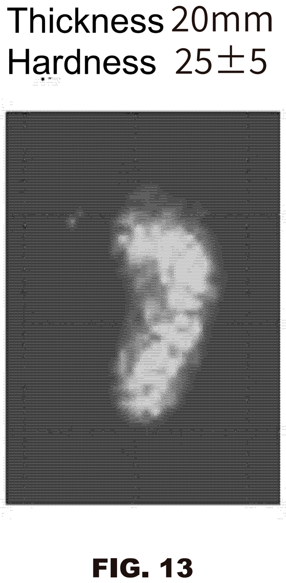

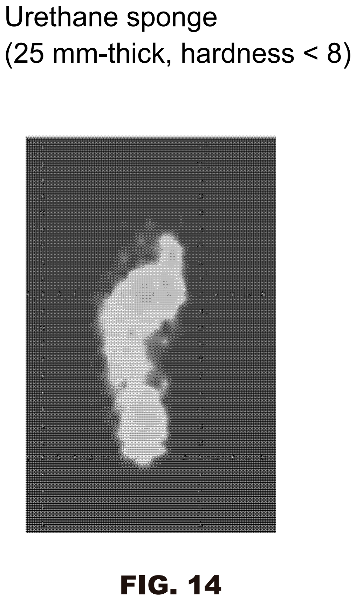

FIG. 10 is a diagram showing an example of sole measurement results in a comparative example. FIG. 11 is a diagram showing an example of sole measurement results in a first configuration example. FIG. 12 is a diagram showing an example of sole measurement results in a second configuration example. FIG. 13 is a diagram showing an example of sole measurement results in a third configuration example. FIG. 14 is a diagram showing an example of sole measurement results in a fourth configuration example.

In these figures, measurement results of the pressure distribution are shown as heat maps. The comparative example shows the measurement results obtained when using a measuring apparatus without the deformable layer 10. In the first configuration example, the deformable layer 10 is made of "EPT-03S" (manufactured by Wakisangyo Co., Ltd.) with a thickness LA of 5 mm and a hardness of 8±5. In the second configuration example, the deformable layer 10 is made of "EPT-03S" (manufactured by Wakisangyo Co., Ltd.) with a thickness LA of 10 mm and a hardness of 8±5. In the third configuration example, the deformable layer 10 is made of a material with a thickness LA of 20 mm and a hardness of 25±5. In the fourth configuration example, the deformable layer 10 is made of urethane sponge with a thickness LA of 25 mm and a hardness of less than 8.

As shown in the figure, in the comparative example, the pressure distribution in the area of the arch and the area of the second to fifth toes do not appear well in the measurement results. Therefore, it may be difficult to use the measurement results to judge whether or not a person has high arches or floating toes. In contrast, it can be seen that the measuring apparatus 1 with the deformable layer 10 is able to capture the pressure distribution over a wider area of the sole than the comparative example. However, if the thickness is too large, the resolution of the pressure distribution in the horizontal direction may be relatively low. Therefore, as a standard practice, for example, it can be said that a measuring apparatus 1 that is compatible with soles with a wider variety of shapes and the like while maintaining relatively high resolution in the horizontal direction can be realized by using a deformable layer 10 made of "EPT-03S" (manufactured by Wakisangyo Co., Ltd.) with a thickness of about 10 mm and a hardness of 8±5 as in the second configuration example. The configuration of the deformable layer 10 may be changed as in the other configuration examples such that proper measurement results can be obtained according to the magnitude of stress (subject's weight, etc.) that may be generated during measurement and other purposes.

Furthermore, an example of simulation results illustrating a configuration example of the measuring apparatus 1 according to this embodiment is shown below.

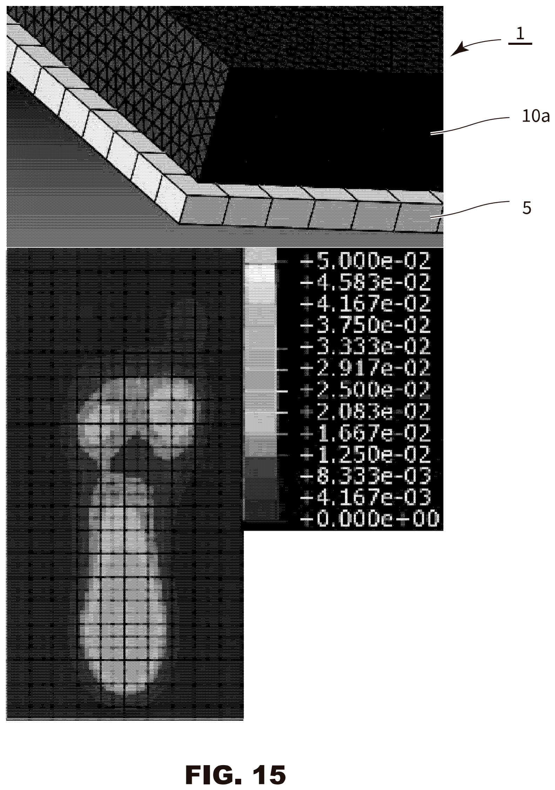

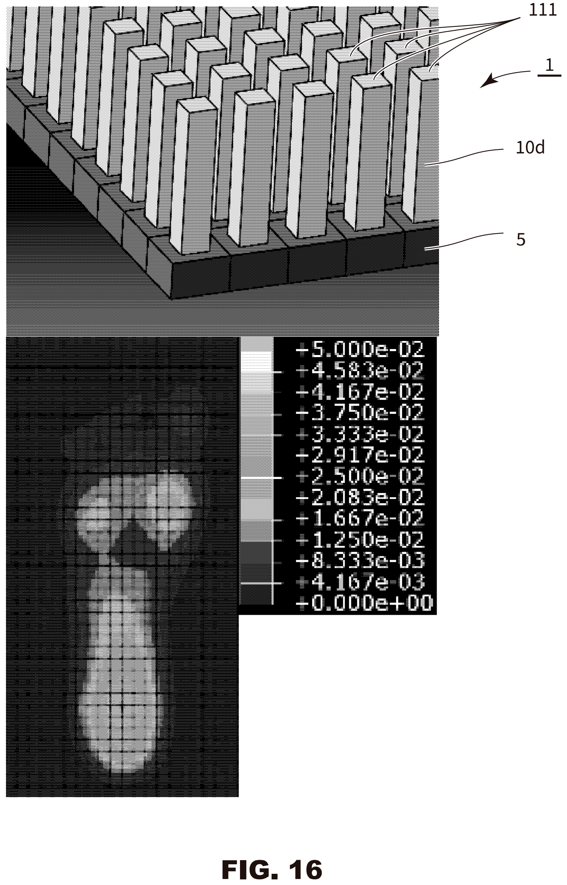

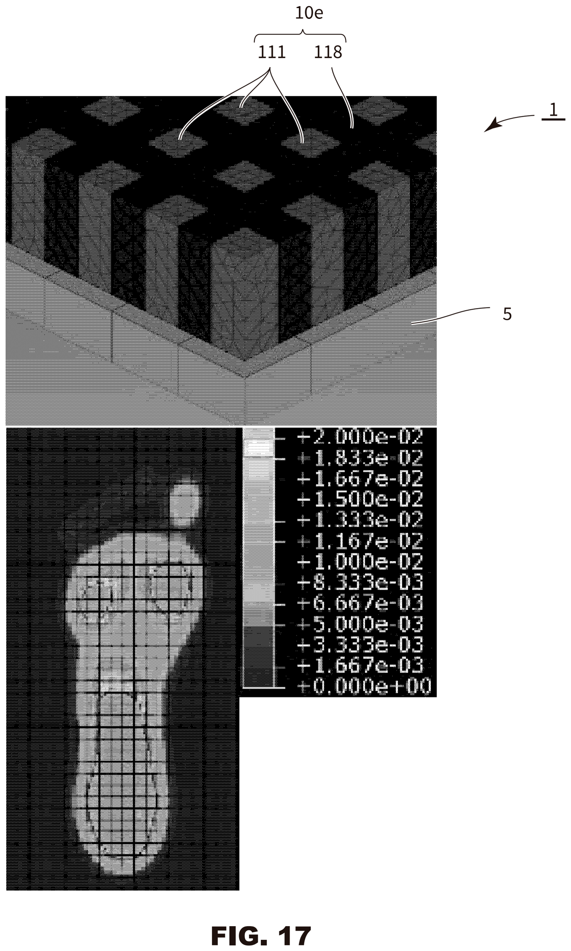

FIG. 15 is a diagram showing simulation results regarding sole measurement results according to a fifth configuration example. FIG. 16 is a diagram showing simulation results regarding sole measurement results according to a sixth configuration example. FIG. 17 is a diagram showing simulation results regarding sole measurement results according to a seventh configuration example.

In the simulation, the material of the deformable layer 10 was set to correlate well with the test results of the uniaxial compression test and the like as described above, and the Poisson's ratio thereof was set to 0. Using the measurement results of the pressure distribution using the actual prototype of the measuring apparatus 1, a model of the foot was created to have an appropriate Young's modulus, and the pressure distribution was obtained when a load was applied to the measuring apparatus 1. In each figure, a diagram showing the model of a configuration example of the measuring apparatus 1, a heat map image showing the sole measurement results, and a legend of the measurement results are shown.

The fifth configuration example is an example using a deformable layer 10a with a thickness LA of 20 mm and a structure that is not divided into the divided sections 111. In this case, the pressure distribution of the second to fifth toes does not appear. This result can be used as a comparative example.

The sixth configuration example is an example using the deformable layer 10d with a thickness LA of 20 mm and a structure in which 3.9 mm square divided sections 111 are aligned. In this case, the pressure distribution appears up to each toe, indicating that proper measurement results can be obtained.

The seventh configuration example is an example using the deformable layer 10e with a thickness LA of 20 mm and a structure in which 4 mm square divided sections 111 are aligned with the filler portions 118 interposed therebetween. The stiffness of the filler portions 118 is set to one-third of the stiffness of the divided sections 111. In this case as well, the pressure distribution appears up to each toe, indicating that proper measurement results can be obtained.

### Operation Example of Measuring System

Hereinafter, an operation example of the measuring system 900 according to this embodiment will be described.

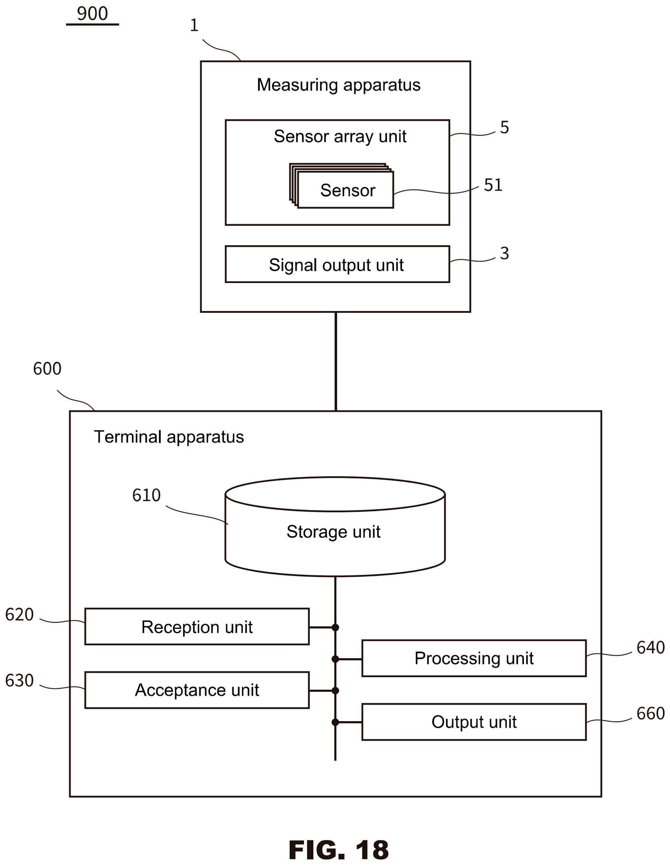

FIG. 18 is a block diagram showing an example of the measuring system 900 according to this embodiment.

As shown in FIG. 18, the measuring apparatus 1 includes the sensor array unit 5 constituted by the multiple sensors 51, and a signal output unit 3.

The signal output unit 3 is configured to be capable of transmitting the detection results of the sensor array unit 5 obtained through detection by the multiple sensors 51, to the terminal apparatus 600. The signal output unit 3 is constituted by, for example, a circuit or the like mounted in the substrate 55 of the sensor array unit 5 or the like, but there is no limitation to this.

The signal output unit 3 is configured to be capable of collectively transmitting, for example, data (also referred to as "signals") indicating the detection results of the respective multiple sensors 51 on each reading opportunity (also referred to as "frame") that arrives at predetermined intervals. Hereinafter, the data of the detection results of the respective multiple sensors 51 on a reading opportunity may be collectively referred to as one frame of data. In other words, the signal output unit 3 is configured to be capable of transmitting one frame of data including detection results of target sensors 51 that are read, at a predetermined frame rate (also referred to as a "sampling rate", etc.).

The terminal apparatus 600 includes, for example, a storage unit 610, a reception unit 620, an acceptance unit 630, a processing unit 640, and an output unit 660.

Information that is used in the terminal apparatus 600 is stored in the storage unit 610. The storage unit 610 is, for example, a non-volatile recording medium, but it may alternately be realized by a volatile recording medium. Acquired information and the like are stored in the storage unit 610, but the procedure in which information and the like are stored is not limited to this. For example, information and the like may be stored via a recording medium, information and the like transmitted via a communication line or the like may be stored, or information and the like input via an input device may be stored.

The reception unit 620 receives, via a network, information transmitted from the measuring apparatus 1 and other apparatuses. The reception unit 620 accumulates the received information, for example, in the storage unit 610 such that it can be acquired by the processing unit 640 and the like. The reception unit 620 is realized by, for example, a wireless or wired communication part.

The acceptance unit 630 accepts various input operations on the terminal apparatus 600 by a user who uses the terminal apparatus 600. The operations are performed, for example, using an unshown input device, but there is no limitation to this. The information that can be accepted by the acceptance unit 630 may be input by any input part such as a numeric keypad, a keyboard, a mouse, or a menu screen. The acceptance unit 630 may be realized by a device driver for an input part such as a numeric keypad or a keyboard, control software for a menu screen, or the like.

The processing unit 640 performs various information processing operations using the units of the terminal apparatus 600. In this embodiment, the processing unit 640 is configured to, for example, read the detection results of the measuring apparatus 1 as described below and acquire measurement results based on the results.

The processing unit 640 may be typically realized by an MPU, a memory, or the like. Typically, the processing procedure of the processing unit 640 is realized by software, and the software is stored in a recording medium such as a ROM. Note that the processing procedure may be realized by hardware (dedicated circuit).

The output unit 660 outputs information, for example, or by displaying it on a display device. The method for outputting information is not limited to this, and the output may be performed by outputting voice or other sounds from a speaker or the like. The output unit 660 is configured to, for example, be capable of outputting information on the measurement results acquired by the processing unit 640.

In this embodiment, the terminal apparatus 600 causes the reception unit 620 to receive data output by the signal output unit 3 from the measuring apparatus 1. The processing unit 640 is configured to acquire measurement results by reading the received data.

In this embodiment, the measuring system 900 is configured to perform sensor alternating readings of the measuring apparatus 1 including the multiple sensors 51. That is to say, the processing unit 640 acquires (reads) detection results on a reading opportunity by using some sensors of the multiple sensors as reading targets. The processing unit 640 acquires detection results on multiple reading opportunities such that different sensors are reading targets on each reading opportunity. The processing unit 640 acquires measurement results, using detection results acquired on each of the multiple reading opportunities in this manner. In other words, the processing unit 640 is configured to be capable of acquiring measurement results, using the results of the sensor alternating readings of the measuring apparatus 1 including the multiple sensors 51.

The sensor alternating readings in this embodiment are realized, for example, by the signal output unit 3, the processing unit 640, and the like. For example, two combinations of target sensors 51R that are reading targets (also referred to as a "first group" and a "second group") are set in advance, and each time a reading opportunity arrives, the signal output unit 3 switches between transmitting data of the target sensors 51R in the first group as one frame of data and transmitting data of the target sensors 51R in the second group as one frame of data. The processing unit 640 acquires measurement results using the data of the first group and the data of the second group transmitted on each reading opportunity. For example, the processing unit 640 synthesizes the data of the first group and the data of the second group respectively transmitted on two consecutive reading opportunities into a single set of data, and acquires measurement results using the data. This allows the measurement result to be acquired using the data detected by all of the multiple sensors 51. The measurement results that are acquired can be, for example, an image such as a still image or a moving image (time series image) showing the pressure distribution, but there is no limitation to this.

In this embodiment, the deformable layer 10 in which the sections respectively corresponding to the sensors 51 are not completely divided from each other is used, and thus strain of a section corresponding to one sensor 51 is considered to be affected by strain of sections corresponding to other sensors 51 in the proximity. That is to say, the detection results of one sensor 51 may be related to the detection results of other sensors 51 in the proximity. In the case of using the measuring apparatus 1 with such a deformable layer 10, it may be possible to obtain accurate measurement results with higher resolution, by synthesizing the data of multiple groups obtained by performing sensor alternating readings and treating the synthesized data as one frame of data rather than by using the detection results of all sensors 51 in each frame.

When performing sensor alternating readings in this manner, the frame rate is preferably higher than (e.g., twice as high as) the frame rate when processing the detection results of all sensors 51 in each frame. This allows for accurate results.

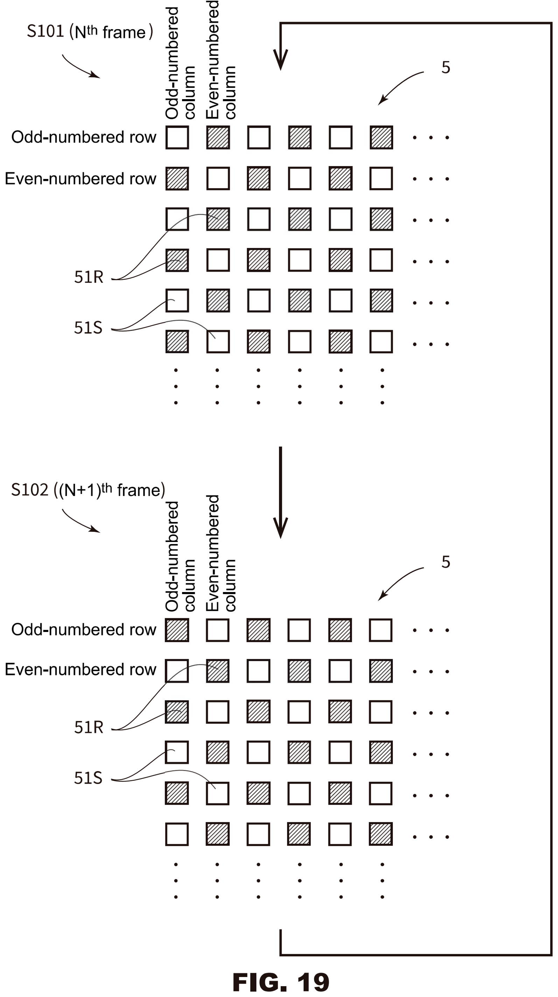

FIG. 19 is a diagram illustrating a specific example of a sensor reading method of the measuring system 900.

In the following explanation, it is assumed that the sensor array unit 5 in which the sensors 51 are aligned in a matrix of N rows and M columns is used. As shown in FIG. 19, in the sensor alternating readings of this specific example, for example, two combinations of target sensors 51 that are reading targets are set. In the combination of the first group (step S101), sensors 51 in even-numbered rows and even-numbered columns are taken as the target sensors 51R, and sensors 51 in odd-numbered rows and odd-numbered columns are taken as non-target sensors 51S that are not reading targets. In the combination of the second group (step S102), contrary to the first group, the sensors 51 in even-numbered rows and even-numbered columns are taken as the non-target sensors 51S, and the sensors 51 in odd-numbered rows and odd-numbered columns are taken as the target sensors 51R. In the case of performing the measurement, the processing is repeated in which one frame of data of the first group is transmitted to the terminal apparatus 600 on a first reading opportunity (step S101), and then one frame of data of the second group is transmitted to the terminal apparatus 600 on a second reading opportunity (step S102). That is to say, the target sensor 51R is switched alternately between the first group and the second group. There is no limitation on the order between the first reading opportunity and the second reading opportunity.

In this manner, in this specific example, the detection results of the target sensors 51R in which one of the two adjacent sensors 51 in both the width direction (row direction) and the length direction (column direction) is taken as a non-target sensor 51S are acquired in each frame. Accordingly, in each frame, the detection results of multiple target sensors 51R are less related to each other. It is possible to obtain measurement results with higher resolution, for example, by synthesizing the consecutively transmitted data of the first group and the second group into a single set of data on the reading opportunities, and causing the processing unit 640 to acquire measurement results using the data.

In the case of performing sensor alternating readings, for example, the target sensors 51R in each frame are preferably selected such that two sensors 51 that are adjacent to each other in at least one direction are not used together as reading targets in the same frame. This allows accurate results to be more reliably obtained.

In the case of performing sensor alternating readings, there may be three or more combinations of target sensors 51R that are reading targets. The combination of target sensors 51R may be randomly determined in each frame.

The configuration of the measuring system 900 is not limited to that described above, and part or all of the processing to realize the sensor alternating readings may be performed by the signal output unit 3 or the like of the measuring apparatus 1. For example, the measuring apparatus 1 may be configured such that the processing unit 640 described above can be regarded as being substantially provided in the measuring apparatus 1. The sensor alternating readings may be realized by switching the reading results to be processed in the processing unit 640 from frame to frame among the reading results of the multiple sensors 51 transmitted in the respective frames from the signal output unit 3.

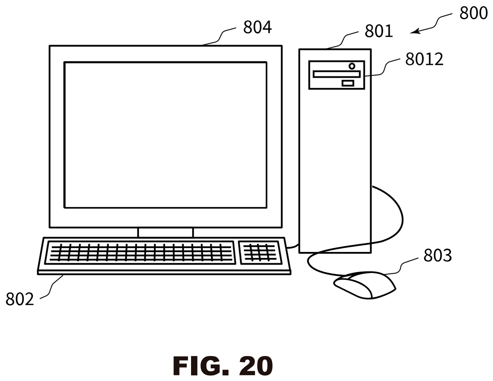

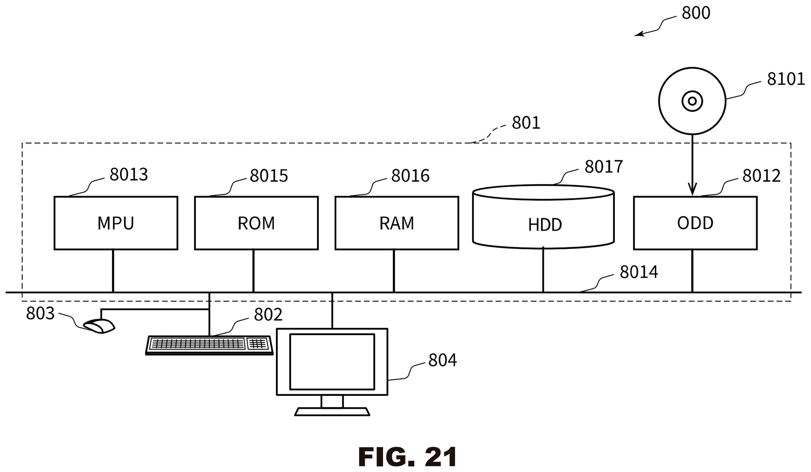

FIG. 20 is a schematic view of a computer system 800 in the foregoing embodiment. FIG. 21 is a block diagram of the computer system 800 in the foregoing embodiment.

These drawings shows the configuration of a computer that executes the program described in this specification to realize the terminal apparatus and the like in the foregoing embodiment. The foregoing embodiment may be realized using computer hardware and a computer program executed thereon.

The computer system 800 includes a computer 801, a keyboard 802, a mouse 803, and a monitor 804.

The computer 801 includes an optical disk drive (ODD) 8012, as well as an MPU 8013, a bus 8014 connected to the optical disk drive 8012 and the like, a ROM 8015 in which a program such as a boot up program is stored, a RAM 8016 that is connected to the MPU 8013 and is a memory in which a command of an application program is temporarily stored and a temporary storage area is provided, and a hard disk 8017 in which programs such as application programs and system programs and data are stored. Although not shown, the computer 801 may further include a network card that provides connection to a LAN.

The program for causing the computer system 800 to execute the functions of the terminal apparatus and the like in the foregoing embodiment may be stored in an optical disk 8101 that is inserted into the optical disk drive 8012, and be transmitted to the hard disk 8017. Alternatively, the program may be transmitted via a network (not shown) to the computer 801 and stored in the hard disk 8017. At the time of execution, the program is loaded into the RAM 8016. The program may be loaded from the optical disk 8101, or directly from a network.

The program does not necessarily have to include, for example, an operating system (OS) or a third party program to cause the computer 801 to execute the functions of the terminal apparatus and the like in the foregoing embodiment. The program may only include a command portion to call an appropriate function (module) in a controlled mode and obtain desired results. The manner in which the computer system 800 operates is well known, and thus a detailed description thereof has been omitted.

It should be noted that, in the program, in a transmitting step of transmitting information, a receiving step of receiving information, or the like, processing that is performed by hardware, for example, processing performed by a modem or an interface card in the transmitting step (processing that can be performed only by hardware) is not included.

Furthermore, the computer that executes the program may be a single computer, or may be multiple computers. That is to say, centralized processing may be performed, or distributed processing may be performed.

Furthermore, in the foregoing embodiment, two or more constituent elements in one apparatus may be physically realized by one medium.

Furthermore, in the foregoing embodiment, each constituent element may be configured by dedicated hardware, or alternatively, constituent elements that can be realized by software may be realized by executing a program. For example, each constituent element may be realized by a program execution unit such as a CPU reading and executing a software program stored in a recording medium such as a hard disk or a semiconductor memory. At the time of executing the program, the program execution unit may execute the program while accessing the storage unit or the recording medium. Furthermore, this program may be executed by downloading from a server or the like, or may be executed by reading a program stored in a predetermined recording medium (e.g., an optical disk, a magnetic disk, a semiconductor memory, etc.). Furthermore, the program may be used as a program for constituting a program product. Furthermore, the computer that executes the program may be constituted by a single computer, or constituted by multiple computers. That is to say, centralized processing may be performed, or distributed processing may be performed, respectively.

In the foregoing embodiment, each process (function) may be realized as centralized processing using a single apparatus (system), or may be realized as distributed processing using multiple apparatuses (in this case, the entire system constituted by multiple apparatuses that perform distributed processing may be regarded as one "apparatus").

### Others

The present invention is not limited to the embodiment set forth herein. Various modifications are possible within the scope of the invention.

An embodiment may be configured by combining constituent elements of the foregoing embodiment or modified examples as appropriate. For example, the configuration of the foregoing embodiment is not limited to those described above, and constituent elements of the foregoing embodiment or modified examples may be replaced by or combined with constituent elements of other embodiments or the like as appropriate. Some of the constituent elements or the functions may be omitted in the foregoing embodiment or modified examples.

The divided sections being independently compressible and deformable may be interpreted to mean that when a divided section is compressed or deformed in a pressurized state in which a force is applied in the vertical direction to the deformable layer, the divided section hardly comes into contact with another divided section, or it hardly affects the deformation of another divided section even if it comes into contact with that divided section. For example, the deformable layer is not limited to being made of a material such as sponge with a Poisson's ratio as described above. For example, the deformable layer may be formed using a material such as an elastomer-based material that does not contain an air layer and is not as compressible as sponge. Even when such a material with relatively poor compressibility is used, it is preferable that the deformable layer be configured such that the divided sections are independently compressible and deformable in a pressurized state. In order to realize this configuration, for example, the dimensions of the multiple divided sections (including the dimensions of the spacer portions) or the shapes of the multiple divided sections may be selected such that the divided sections are independently compressible and deformable in a pressurized state. In other words, the dimensions of the divided sections, the dimensions of the spacer portions, the shape of the divided sections, and the like may be set such that adjacent divided sections do not physically come into contact with other due to the deformation in a pressurized state. Even when the deformable layer is formed using a material with relatively poor compressibility, the divided sections can be prevented from coming into contact with other in a pressurized state and affecting the measurement results, and thus it is possible to obtain proper measurement results. If a material that does not contain an air layer is used, the response speed can be increased by not including an air layer. In addition, the deformable layer can be configured to have a high restoration rate or to be less susceptible to plastic deformation, to configure a more durable measuring apparatus.

In the foregoing embodiment, an example was described in which EPDM sponge is used as the material for the deformable layer, but other materials may be used. For example, if a sponge or foam material is used, for example, urethane sponge, silicone sponge, polyester sponge, melamine sponge, EPDM sponge, NBR sponge, CR rubber sponge, NR sponge, Poron sponge, or the like may be used. If an elastomer material that is not a foam is used, for example, silicone-based, urethane-based, styrene-based, olefin-based, PVC-based, polyamide (TPAE)-based, nitrile-based, or polybutadiene-based materials may be used. The deformable layer is preferably formed using a material with a hardness of 20 N or more and 200 N or less in the hardness test (A method) as defined in "JIS K 6400-2" or a material with a hardness of 3 to 20 as measured using a durometer "Asker Durometer Type C" (manufactured by Kobunshi Keiki Co., Ltd.). The deformable layer is more preferably formed using a material with a restoration rate of 95% or higher (thickness reduction rate of less than 5%) in the repeated compression residual strain test (A method) as defined in "JIS K6400-4". The use of a material that meets these conditions allows for a highly durable measuring apparatus capable of obtaining more proper measurement results.

In the foregoing embodiment, the divided sections in the deformable layer do not have to be divided in the same manner as the respective sensors in the sensor array unit. The dividing positions (positions of the spacer portions) may not have to be related to the positions at which the sensors are divided. Even if how the divided sections are divided and the positions of the spacer portions are not related to the arrangement of the sensors in the sensor array unit, it is possible to obtain effects similar to those of the foregoing embodiment without particular differences in accuracy.

The measurement target of the measuring apparatus is not limited to soles. For example, the measuring apparatus may be used to measure the pressure distribution of a person in a sleeping position, or to measure the pressure distribution against the seat surface of a person's waist or buttocks in a sitting position. For example, the measuring apparatus may be applied to beds, sofas, cushions, and the like.

Furthermore, the measuring apparatus is not limited to an apparatus with a rectangular mat-like shape, and may be a measuring apparatus having a placement face with various shapes and configurations for measurement. That is to say, the measuring apparatus is not limited to those for measuring a part of the human body, and may be utilized as appropriate to measure pressure distribution on the ground surface of various objects, or to measure detection target items corresponding to a three-dimensional shape and the like. In the case of a two-dimensional planar measuring apparatus, the shape of the placement face can be square, circular, rectangular, fan-shaped, or various other shapes. For example, the shape of the placement face can be the shape of a shoe insole or a shoe outsole. For example, the placement face may be a curved face or a combination of multiple faces. For example, the deformable layer may have a curved shape such as the shape of the seat surface of a chair, or may have the shape of grips of a handlebar of a bicycle or the like or a grip of a racket or the like used in a ball game. In this case, the sensor array unit may have a shape that conforms to the shape of the placement face, or the multiple sensors may be arranged at positions that conform to the shape of the placement face.

Furthermore, the placement face of the measuring apparatus is not limited to that on which a target object is placed. The measuring apparatus may be configured such that the deformable layer is deformed by being pressed against the surface of the target object or by rolling over the surface of the target object. For example, the measuring apparatus may be configured such that the placement face is constituted by two plates and the measurement is performed with the target object sandwiched between the two plates. Measurement results can be obtained according to the shape of the target object and the like. For example, a roller-shaped measuring apparatus may be used in which the sensors of the sensor array unit are arranged in a cylindrical pattern and the deformable layer is disposed around the outside of the sensor array unit. With such a measuring apparatus, it is possible to obtain measurement results according to the shape of the target object according to the detection results of each sensor and the number of rotations of the roller-shaped portion, by tracing the target object with this measuring apparatus.

### Industrial Applicability

As described above, the measuring apparatus and the like according to the present invention has an effect of making it possible to obtain measurement results of a detection target item of a target object such that the influence of the stiffness and the shape of the target object is relatively small, thus rendering this apparatus useful as a measuring apparatus and the like.

### List of Reference Numerals

- 1: Measuring apparatus
- 3: Signal output unit
- 5: Sensor array unit
- 10, 10a, 10b, 10c, 10d, 10e: Deformable layer
- 11: First layer
- 12: Second layer
- 51: Sensor
- 51R: Target sensor
- 51S: Non-target sensor
- 52: Aperture
- 55: Substrate (example of placement face)
- 111: Divided section
- 113: Spacer portion
- 118: Filler portion
- 600: Terminal apparatus
- 620: Reception unit
- 640: Processing unit
- 660: Output unit
- 900: Measuring system

## Claims

1. A measuring apparatus comprising:
a sensor array unit having multiple sensors that are aligned on a placement face and that are each capable of detecting a detection target item of a target object that is positioned so as to oppose the placement face; and
a deformable layer that is a flexible layer disposed so as to be located between the sensor array unit and a target object,
wherein the deformable layer has multiple sections that are divided from each other so as to be independently compressible and deformable mainly in a normal direction of the placement face.

2. The measuring apparatus according to claim 1,
wherein the multiple sensors included in the sensor array unit are each a resistance change pressure sensor, a capacitance change pressure sensor, a photo reflector, or a SAW device, and
the multiple sensors are each configured to perform detection according to a change in physical properties of the deformable layer.

3. The measuring apparatus according to claim 1, wherein the deformable layer is formed using a material with a Poisson's ratio of less than 0.2, or has the multiple sections formed in a shape or dimensions that do not allow adjacent sections to come into contact with each other in a pressurized state in which a force is applied in a vertical direction to the deformable layer.

4. The measuring apparatus according to claim 1, wherein the multiple sections are aligned in a direction along the placement face, on a face of the deformable layer that opposes the sensor array unit.

5. The measuring apparatus according to claim 1,
wherein the multiple sensors are aligned in a horizontal direction, and
the deformable layer has a first layer in which the multiple sections are spaced apart from each other and are aligned in a direction along the placement face, and a plate-like second layer that is disposed on at least the top or the bottom of the first layer.

6. The measuring apparatus according to claim 5, wherein a ratio of a vertical dimension of the second layer to a vertical dimension of the deformable layer is less than 0.3.

7. The measuring apparatus according to claim 1,
wherein the multiple sections are spaced apart from each other in a direction along the placement face,
a filling material that is different from a constituent material forming the multiple sections is disposed between the multiple sections, and
the filling material has a stiffness that is less than or equal to one-half of a stiffness of the constituent material.

8. The measuring apparatus according to claim 1, wherein the deformable layer is formed using a material with a ratio of a loss modulus to a storage modulus of less than or equal to one-tenth.

9. The measuring apparatus according to claim 1, wherein the deformable layer is formed using a material in which stress generated in response to strain caused by the outside increases monotonically with a magnitude of the strain.

10. The measuring apparatus according to claim 1, wherein the deformable layer is formed using a foam material with a closed cell structure.

11. The measuring apparatus according to claim 1,
wherein the multiple sensors are capable of detecting pressure and each have a rectangular aperture for performing detection, and
the deformable layer has a thickness of more than 1 and less than 2.5 relative to a dimension of a short side of the rectangular aperture.

12. The measuring apparatus according to claim 1, wherein the deformable layer is formed using EPDM sponge rubber.

13. A measuring system comprising a measuring apparatus, and a processing unit that acquires a measurement result using a detection result of the measuring apparatus,
wherein the measuring apparatus includes:
a sensor array unit having multiple sensors that are aligned on a placement face and that are each capable of detecting a detection target item of a target object that is positioned so as to oppose the placement face; and
a deformable layer that is a flexible layer disposed so as to be located between the sensor array unit and a target object,
the deformable layer has multiple sections that are divided from each other so as to be independently compressible and deformable mainly in a normal direction of the placement face, and
the processing unit is configured to acquire a measurement result using a detection result obtained by using some sensors of the multiple sensors as reading targets on each of multiple reading opportunities such that different sensors are reading targets on each reading opportunity.

14. The measuring system according to claim 13,
wherein the multiple sensors are aligned in at least one predetermined direction, and
the processing unit is configured to acquire a measurement result using a detection result obtained by using some sensors of the multiple sensors as reading targets on each of multiple reading opportunities such that two sensors that are adjacent to each other in the predetermined direction are not used together as reading targets on a same reading opportunity.

15. The measuring system according to claim 13,
wherein the multiple sensors are aligned in a matrix of N rows and M columns,
the processing unit is configured to acquire a measurement result using a detection result obtained by synthesizing a detection result of sensors in a first group that are reading targets on a first reading opportunity and a detection result of sensors in a second group that are reading targets on a second reading opportunity,
the sensors in the first group are in even-numbered rows and even-numbered columns of the multiple sensors, and
the sensors in the second group are in odd-numbered rows and odd-numbered columns of the multiple sensors.
